# EUROPÄISCHE PATENTSCHRIFT

(11) **EP 0 521 330 B1**
(45) Veröffentlichungstag und Bekanntmachung des Hinweises auf die Patenterteilung: **10.05.1995**
(21) Anmeldenummer: 92110094.7
(22) Anmeldetag: 16.06.1992
(51) Int. Cl.: B60G 15/06, B25B 27/30

(54) **Werkzeug zum Ausrichten eines Federdämpferbeines**
Tool for aligning a spring-damper type suspension strut
Outil pour l'ajustage d'une jambe de suspension du type ressort-amortisseur

(30) Priorität: 03.07.1991 DE 4121938
(43) Veröffentlichungstag der Anmeldung: 07.01.1993
(73) Patentinhaber: Klann, Horst, D-78052 Villingen-Schwenningen (DE)
(72) Erfinder: Klann, Horst, D-78052 Villingen-Schwenningen (DE)
(74) Vertreter: Neymeyer, Franz, Dipl.-Ing. (FH)

(56) Entgegenhaltungen:
- DE-A- 3 312 453
- FR-A- 2 484 894
- US-A- 4 486 935
- US-A- 4 604 797
- US-A- 4 703 547
- US-A- 4 732 365

## Beschreibung

Die Erfindung betrifft ein Werkzeug zum Ausrichten von Federdämpferbeinen von Kraftfahrzeugen, gemäß den Oberbegriff des Anspruchs 1.

Bei solchen Federdämpferbeinen ist der Zylinder des Stoßdämpfers an seinem einen Ende mit einem eine Lagerbuchse aufweisenden Lagerauge versehen, das in einer bestimmten Achsrichtung in einem dafür vorgesehenen Aufnahmelager der Fahrzeugachse befestigt wird. Das Befestigungsbauteil, das am oberen Ende des Stoßdämpfers angeordnet ist und die Befestigungselemente in Form von Bohrungen und/oder Zapfen aufweist, nimmt im eingebauten Zustand aufgrund der im Fahrgestell des Kraftfahrzeuges vorgesehenen Befestigungsvorrichtungen ebenfalls eine bestimmte Lage ein, so daß beispielsweise eine Achse einer Befestigungshülse des Befestigungsbauteils oder die Verbindungslinie zweier Bohrungen des Befestigungsbauteils zur Achse des am unteren Ende des Stoßdämpferzylinders angeordneten Lagerauges einen bestimmten Winkel einnehmen. Dieser Winkel ist nachfolgend als Adapterwinkel bezeichnet.
Um ein solches Federdämpferbein als komplette Baugruppe in einem Kraftfahrzeug montieren zu können, ist es erforderlich, daß dieser Adapterwinkel zwischen der Achse des Lagerauges des Stoßdämpferzylinders und der Achse der Befestigungshülse bzw. der Verbindungslinie zweier Bohrungen des Befestigungsbauteils am Federdämpferbein bereits bei seiner Montage eingestellt wird. Es gibt unterschiedliche Federdämpferbeine, bei denen der Adapterwinkel 90°, 21° oder 51° beträgt. Dabei muß das Einstellen dieses Adapterwinkels in einem Zustand geschehen, in dem die Schraubendruckfeder mittels eines an ihr angesetzten Federspanners so gespannt ist, daß die beiden federteller, auf denen die Federenden normalerweise aufsitzen, frei sind und sich gegeneinander verdrehen lassen. Ferner ist zu berücksichtigen, daß auch die beiden Federteller jeweils mit in Umfangsrichtung abgesetzten Anschlägen für die stumpfen Federenden der Schraubendruckfeder versehen sind, so daß auch diese relativ zueinander bestimmte Winkellagen einnehmen müssen.

Bei der Montage von Federdämpferbeinen durch Roboter ist es bekannt (US-A-46 04 797), den Robotergreifarm mit einer Führungseinrichtung zu versehen. Diese Führungseinrichtung ist für die Montage geteilter Federdämpferbeine vorgesehen, welche am unteren Ende ihres Stoßdämpferrohres mit einem plattenartigen radial zum Stoßdämpferrohr verlaufenden Befestigungsarm versehen sind, der beim Zugriff des Robotergreifarms in der Führungseinrichtung formschlüssig aufgenommen wird. Am oberen Ende weist ein solches Federdämpferbein eine Befestigungsplatte mit Befestigungsbolzen auf, welche am oberen Ende des Federdämpferbeines um dessen Achse drehbar gelagert ist. Bei der Fließbandmontage solcher Federdämpferbeine sind diese in einem magazinartigen Gestell gelagert, von welchem sie vom Roboter entnommen werden. Das Gestell ist mit mehreren Schlitzen versehen, in welche die Befestigungsbolzen der Befestigungsplatte des Federdämperbeines eingreifen, so daß die Befestigungsplatte im Gestell ortsfest fixiert ist. Vor der Entnahme aus dem Gestell wird durch Drehen des Stoßdämpferrohres mit dem Befestigungsarm, an welchem der Robotergreifarm angreift, gegenüber der oberen Befestigungsplatte ausgerichtet. Nachfolgend wird dann das komplette Federdämpferbein in die entprechende Fahrzeugkarosserie eingesetzt. Die Führungseinrichtung ist nur für eine ganz bestimmte Art von Federdämpferbeinen, wie oben beschrieben verwendbar und sie kann auch nur im Zusammenhang einer Roboter-Fließbandmontage beim Einsetzen von Federdämpferbeinen in eine Fahrzeugkarosserie verwendet werden. Die Einstellung eines Adapterwinkels bei gespannter Schraubendruckfeder ist mit dieser Führungseinrichtung nicht möglich.

Desweiteren ist ein gattungs gemäßes Werkzeug zur Montage bzw. zur Demontage von Federn für Mc Pherson-Federbeine bekannt (FR-A-2 484 894), welches als stationärer Federnspanner ausgebildet ist. Auf einem Standsockel ist eine vertikale Standsäule angeordnet, welche aus zwei teleskopartig ineinander schiebbaren Teleskopelementen besteht. Diese Teleskopelemente werden mittels einer von Hand betätigbaren Gewindespindel in Standsäulen-Achsrichtung gegeneinander verschoben, wobei das untere Teleskopelement mit dem Standsockel fest verbunden ist. Das obere Teleskopelement weist einen ringartigen rechtswinklig zum Teleskopelement an dessen oberen Ende festsitzend angeordneten Trägerarm auf. Dieser polygonal oder kreisförmig ausgebildete Trägerarm ist mit drei um 120° zueinander versetzten Stützelementen versehen, welche nach innen gerichtete Aufnahmezapfen aufweisen. Vertikal unterhalb des Trägerarms ist ein zweites unteres Stützelement zur Aufnahme des unteren Endes eines Federbeines vorgesehen. Dieses zweite Stützelement ist auf unterschiedliche Längen eines zu montierenden Federbeines in vertikaler einstellbar und fixierbar teleskopartig ausgebildet. Das zweite Stützelement verläuft vertikal, parallel in einem Abstand zum Teleskopständer und ist ebenfalls feststehend auf dem Standsockel montiert. Zwischen der Standsäule und dem zweiten Stützelement ist ein weiteres teleskopartig in seiner Höhe verstellbares Stützorgan vorgesehen, welches mit einer am seinem Ende horizontal verlaufenden Klemmschelle versehen ist. Mittels dieser Klemmschelle wird das Federbein mit seinem unteren Federbeinzylinder auf dem zweiten Stützelement gehalten. In dieser Stellung liegen die Aufnahmebolzen des Trägerarms auf dem oberen Federteller des Federbeines auf, so daß durch Drehen der Gewindespindel die Feder bei der Abwärtsbewegung des Trägerarmes zusammengedrückt wird und die obere Verschraubung des Federbeines somit entlastet ist. In dieser Position ist die Federbeinverschraubung gefahrlos zu öffnen, so daß nach dem Entspannen der gespannten Feder diese vom Dämpfer abgenommen werden kann. Beim Zusammenbau in umgekehrter Reihenfolge ist eine Zentrierung der Federn bezüglich der vertikalen Achse des Dämpfers notwendig. Zu diesem Zweck sind die Aufnahmebolzen in separaten vertikal verlaufenden Nuten einzeln vertikal verstellbar, wodurch eine koaxiale Ausrichtung des Dämpfers bezüglich der Feder bzw. der Feder bezüglich des Dämpfers erreicht wird und in gespanntem Zustand die obere Verschraubung des Federbeines aufgeschraubt und angezogen werden kann. Mit diesem Werkzeug ist es allerdings nicht möglich, die oberen und unteren Befestigungsorgane des Federdämpferbeines in ihrer Winkellage zueinander bei gespannter Schraubenfeder auszurichten. Insbesonder ist es nicht möglich einen bestimmten, durch entsprechende Einbaubedingungen für das Federdämpferbein vorgegebenen Adapterwinkel zwischen dem oberen und unteren Befestigungselement des Federbeines bei gespannter Feder präzise einzustellen.

Der Erfindung liegt die Aufgabe zugrunde, ein Werkzeug zu schaffen, mit dem es möglich ist, das Befestigungsbauteil eines Federdämpferbeines mit seinen Befestigungselementen in Bezug auf das Lagerauge des Stoßdämpferzylinders leicht und möglichst exakt einzustellen.

Gelöst wird diese Aufgabe erfindungsgemäß durch die kennzeichnenden Merkmale des Anspruchs 1.

Der Hauptvorteil dieses Werkzeuges besteht in seinem einfachen Aufbau und seiner einfachen Handhabung, die auch einen bedienungssicheren Gebrauch erlaubt, indem entweder das Lagerauge des Stoßdämpferzylinders oder aber das Federbeinrohr in der Einspanneinheit fest eingespannt werden kann. Ein weiterer, ebenfalls arbeitstechnisch wichtiger Vorteil besteht darin, daß sich das Einstellen des vorgegebenen Adapterwinkels zwischen der Achse des Lagerauges des Stoßdämpferzylinders einerseits und der Achse einer Lagerhülse oder der Verbindungslinie zweier Befestigungselemente des Befestigungsbauteils mit Hilfe des Ausrichtlineals sehr einfach und genau einstellen bzw. mit Hilfe der Winkelskala bestimmen läßt.

Durch die Ausgestaltung der Erfindung nach Anspruch 2 ist auch die vorteilhafte Möglichkeit gegeben, die Standsäule mit ihrem Kopfteil auf unterschiedliche Längen verschiedener Federdämpferbeine einzustellen, so daß das Werkzeug für die Montage unterschiedlicher Federdämpferbeine geeignet und somit universell einsetzbar ist.

Durch die Ausgestaltungen der Ansprüche 3, 4 und 5 wird die universelle Verwendbarkeit des Werkzeuges noch dadurch erweitert, daß relativ große Winkelunterschiede zwischen den einzelnen Adapterwinkeln der unterschiedlichen Federdämpferbeine einstellbar sind, und daß das Ausrichtlineal nicht nur bzgl. des genannten Adapterwinkels, sondern auch bzgl. der unterschiedlichen Schräglagen, welche die Befestigungselemente eines Befestigungsbauteils aufweisen können, angepaßt werden kann. Letzteres trägt auch zur Genauigkeit der Winkeleinstellung bei.

Das Vorsehen der in Anspruch 6 erwähnten Auflageplatte ist insbesondere dann von Vorteil, wenn Federdämpferbeine in diesem Werkzeug montiert oder demontiert werden, die nicht mit dem Lagerauge des Stoßdämpferzylinders, sondern mit dem Ferderbeinrohr oder mit dem Dämpferzylinder selbst in die Einspanneinheit eingespannt werden, so daß das Federbeinrohr oder -gehäuse unten auf dieser Auflageplatte aufsitzen kann. Dadurch wird das Einspannen erleichtert.

Um das Werkzeug selbst sicher und einfach zum Gebrauch in der vorgesehen Gebrauchslage fixieren zu können und es trotzdem transportabel zu halten, ist die Ausgestaltung nach Anspruch 7 vorgesehen, durch welche es möglich ist, das Werkzeug z.B. in einen ortsfest montierten Schraubstock einzuspannen.

Die Ausgestaltung nach Anspruch 8 ermöglicht einen einfachen Wechsel der Spannflächen der beiden Spannbacken der Einspanneinheit, so daß diese wahlweise zum Einspannen des Lagerauge des Stoßdämpferzylinders in einer bestimmten Achsrichtung oder aber zum Einspannen des Stoßdämpferzylinders selbst in einer beliebigen Achsrichtung des Lagerauges geeignet ist.

Durch die Ausgestaltung nach Anspruch 9 läßt sich das für die Handhabung und gleichzeitig zur Erreichung der höchsten Einstellgenauigkeit des Adapterwinkels günstigste Ausrichtlineal wahlweise einsetzen, so daß auch diesbezüglich eine Erleichterung der Handhabung erzielt wird.

Anhand der Zeichnung wird die Erfindung nachfolgend näher erläutert. Es zeigt:
- Fig. 1: ein Werkzeug mit einem eingespannten Federdämpferbein in perspektivischer Darstellung;
- Fig. 2: ein Werkzeug mit einem anderen eingespannten Federdämpferbein in einer anderen Anordnung des Ausrichtlineals;
- Fig. 3: in teilweise geschnittener Draufsicht die Einspanneinheit;
- Fig. 4: in Explosionsdarstellung Einzelteile der Standsäule mit der Winkelskala;
- Fig. 5: eine auswechselbare Spannbacke der Einspanneinheit in perspektivischer Ansicht;
- Fig. 6: ein Ausrichtlineal in Seitenansicht;
- Fig. 7: ein anderes Ausrichtlineal in Draufsicht;
- Fig. 8: eine weitere Anordnung des Ausrichtlineals der Fig. 7 am Kopfteil der Standsäule.

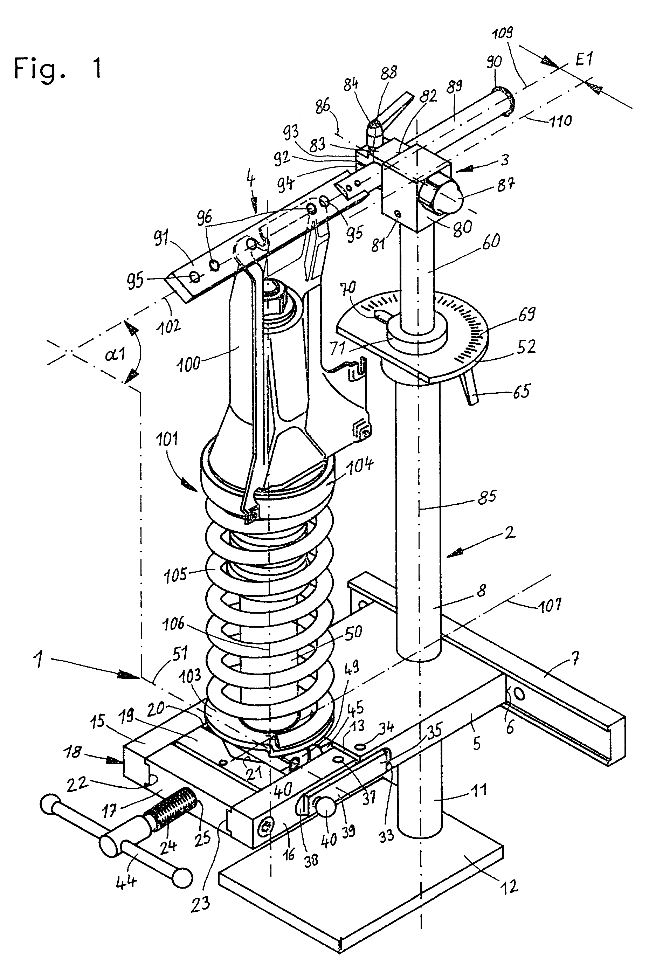

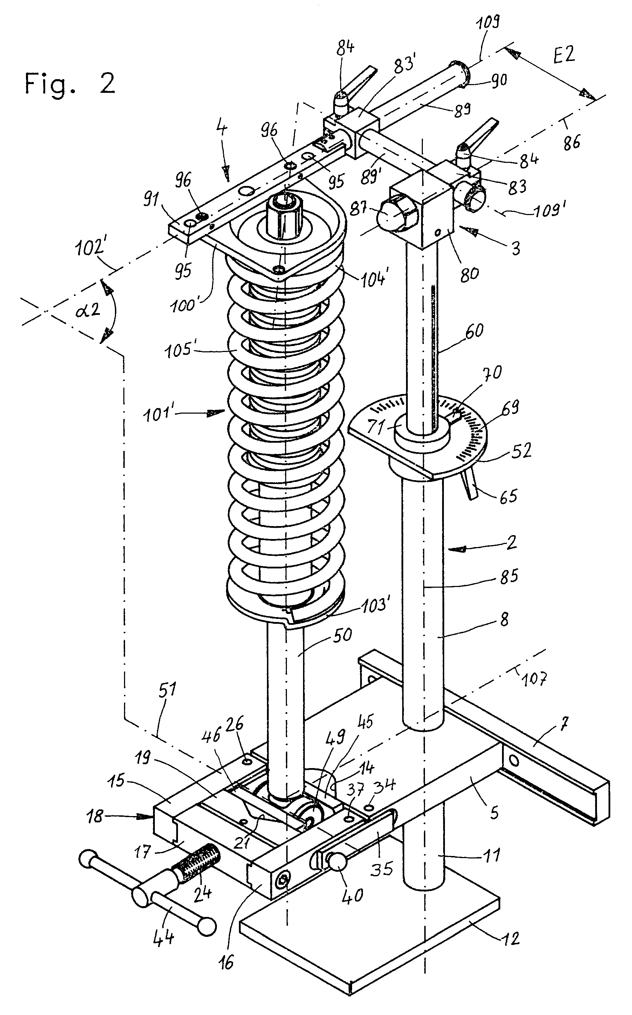

Das in den Fig. 1 und 2 komplett dargestellte Werkzeug besteht im wesentlichen aus einer Einspanneinheit 1, einer Standsäule 2 mit einem Kopfteil 3 und einem Ausrichtlineal 4.

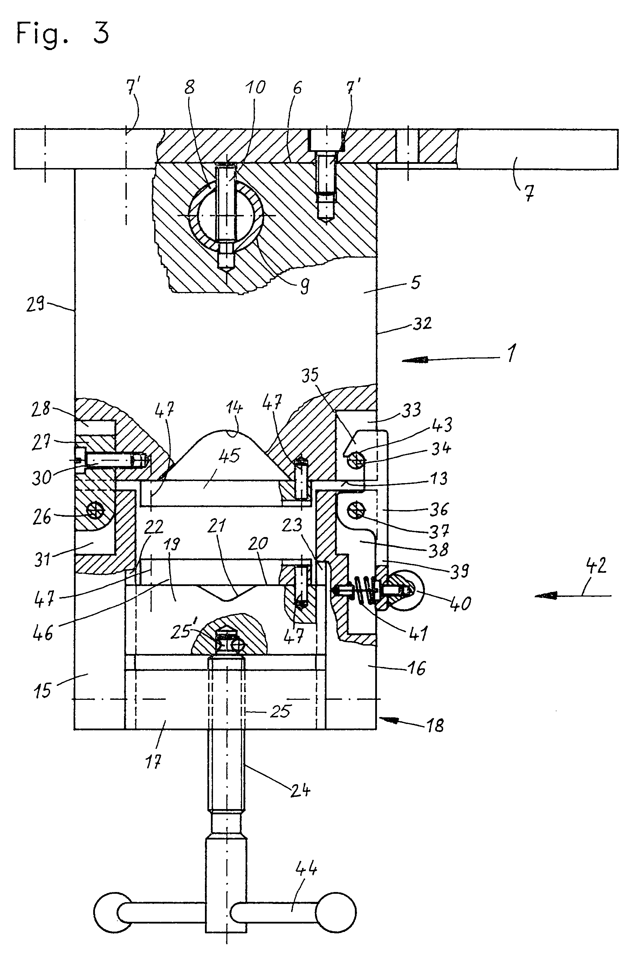

Wie am besten aus den Fig. 1 bis 3 ersichtlich ist, weist die Einspanneinheit 1 als erste, feststehende Spannbacke eine in Gebrauchslage horizontale, im wesentlichen rechteckige Halteplatte 5 auf, die an ihrer rückwärtigen Stirnfläche mit einer angeschraubten, seitlich überragenden Einspannleiste 7 versehen ist, welche beispielsweise in einen ortsfest montierten Schraubstock eingespannt oder aber an eine Werkbank oder dergleichen angeschraubt werden kann. Die Einspannleiste ist mittels Schrauben 7' an der Halteplatte 5 festgeschraubt und zudem mit Befestigungsbohrungen versehen.
In geringem Abstand von der Einspannleiste 7 ist in der Mitte der Halteplatte 5 ein in Gebrauchslage vertikal, also rechtwinklig zur Halteplatte 5 verlaufendes zylindrisches Führungsrohr 8 in einer Bohrung 9 der Halteplatte 5 mittels eines Querstiftes 10 festsitzend, undrehbar befestigt, welches an seinem unten aus der Halteplatte 5 herausragenden Endabschnitt 11 mit einer parallel zur Halteplatte 5 verlaufenden Auflageplatte 12 versehen ist. Der Abstand zwischen der Halteplatte 5 und der Auflageplatte 12 beträgt etwa 15 bis 20 cm. Diese Auflageplatte 12 dient lediglich zur Erleichterung der Handhabung des Werkzeuges in solchen Fällen, bei denen ein Federdämpferbein eines Kraftfahrzeuges in die Einspanneinheit 1 so eingespannt wird, daß das untere Lagerauge des Stoßdämpferzylinders auf der Auflageplatte 12 abgestellt werden bzw. aufsitzen kann.

Auf der der Einspannleiste 7 gegenüberliegenden Stirnseite 13 ist die Halteplatte 5 als Spannbacke mit einer V-förmigen Ausnehmung 14 versehen, die zum Einspannen zylindrischer Bauteile in Vertikallage, z.B. eines Stoßdämpferzylinders, dient.
In einem aus zwei Längsschenkeln 15 und 16 sowie einem Querschenkel 17 bestehenden Spannrahmen 18, der der Stirnseite 13 gegenüberliegend in der gleichen Ebene wie die Halteplatte 5 angeordnet ist, ist eine zweite, quer zur Stirnseite 13 verschiebbare zweite Spannbacke 19 gelagert, die auf der der Halteplatte 5 zugekehrten Stirnseite 20 ebenfalls eine V-förmige Ausnehmung 21 aufweist. Die zweite Spannbacke 19 ist auf Führungsleisten 22 und 23, die an den Innenseiten der Längsschenkel 15 und 16 angeordnet sind, verschiebbar gelagert und durch eine Gewindespindel 24 relativ zur Halteplatte 5 im Spannrahmen 18 verstellbar. Diese Gewindespindel 24 ist in einer Gewindebohrung 25 des Querschenkels 17 des Spannrahmens 18 eingeschraubt und steht durch einen Drehzapfen 25' formschlüssig drehbar mit der zweiten Spannbacke 19 in Verbindung.
Der Spannrahmen 18 ist durch seinen Längsschenkel 15 über ein Gelenk 26 mit einem Gelenkarm 27 schwenkbar verbunden, der in einer Ausnehmung 28 an der Längsseite 29 der Halteplatte 5 mittels einer Schraube 30 befestigt ist und in eine seiner Querschnittsform entsprechende Ausnehmung 31 des Längsschenkels 15 hineinragt. Auf der gegenüberliegenden Längsseite 32 ist die Halteplatte 5 ebenfalls mit einer Ausnehmung 33 versehen, in welcher sich ein zur Achse des Gelenks 26 paralleler Riegelzapfen 34 befindet. Dieser Riegelzapfen 34 wird vom hakenförmigen Riegelkopf 35 eines Schwenkriegels 36 hintergriffen, der schwenkbar auf einem Lagerzapfen 37 in einer Ausnehmung 38 des Längsschenkels 16 gelagert ist und an einem zweiten Hebelarm 39 einen kugelförmigen Handgriff 40 aufweist. Außerdem steht der Hebelarm 23 unter dem Einfluß einer Druckfeder 41, durch welche er in seiner in den Fig. 1 bis 3 dargestellten Verriegelungsposition gehalten wird, in welcher der Riegelkopf 35 den Riegelzapfen 34 der Halteplatte 5 haltend hintergreift. Durch eine Betätigung des zweiten Hebelarmes 39 in Richtung des Pfeiles 42 kann der Riegelkopf 35 vom Riegelzapfen 34 gelöst und der gesamte Spannrahmen 18 um das Gelenk 26 verschwenkt werden. Dadurch, daß der Riegelkopf 35 mit einer hinterschnittenen Riegelfläche 43 versehen ist, welche den Riegelzapfen 34 hintergreift, ist auch sichergestellt, daß das Lösen des Schwenkriegels 38 vom Riegelzapfen 34 nur dann erfolgen kann, wenn die Spannbacke 19 nicht an einem eingespannten Objekt festgespannt, sondern durch entsprechende Betätigung der mit einem Knebel 44 versehenen Gewindespindel zuvor gelöst ist.

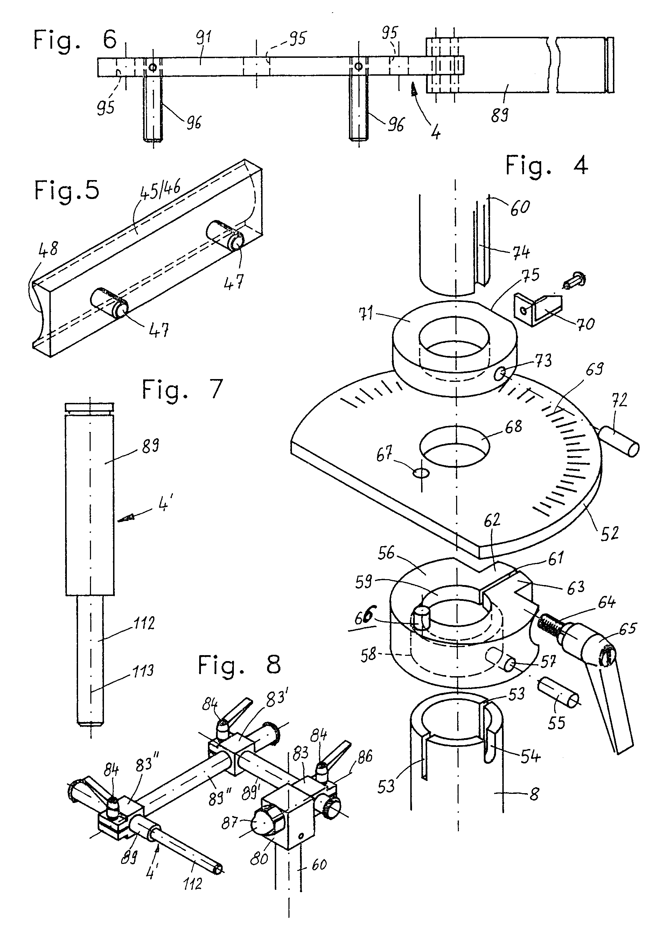

Während die beiden Ausnehmungen 14 und 21 der Halteplatte 5 und der zweiten Spannbacke 19 zum vertikalen Einspannen von zylindrischen Bauteilen, z.B. des Stoßdämpferzylinders eines Federdämpferbeines, dienen, sind zum Einspannen von Lageraugen 49 von Federdämpferbeinen zwei separate Hilfsspannbacken 45 und 46 vorgesehen, die mittels Steckzapfen 47 lösbar an den Stirnseiten 13 bzw. 20 der Halteplatte 5 bzw. der zweiten Spannbacke 19 so angebracht werden können, daß sie die Ausnehmungen 14 bzw. 21 überbrücken.
Diese Hilfsspannbacken 45 und 46 bestehen jeweils aus einem quaderförmigen, länglichen Bauteil, das auf der den Steckzapfen 47 gegenüberliegenden Längsseite eine hohlkehlenartige Vertiefung 48 aufweisen (siehe Fig. 5), mit welchen das Lagerauge 49 eines Stoßdämpferzylinders 50 so aufgenommen werden kann, daß die Achse 51 des Lagerauges eine exakt definierte horizontale Lage in Bezug auf die Standsäule 2 einnimmt und beispielsweise parallel zu dem Querschenkel 17 des Spannrahmens 18 bzw. parallel zu den Stirnseiten 13 bzw. 20 der Halteplatte 5 bzw. der zweiten Spannbacke 19 verläuft.

Das in Gebrauchslage vertikal verlaufende Führungsrohr 8 überragt die Halteplatte 5 mit einer Höhe von etwa 30 cm. Es ist an seinem oberen Ende mit einer segmentartig abgeschnittenen, im übrigen runden Skalenscheibe 52 versehen, die auf nachfolgend beschriebene Weise drehfest mit dem Führungsrohr 8 verbunden ist. In Fig. 4 ist erkennbar, daß das obere Ende des Führungsrohres 8 mit zwei sich diametral gegenüberliegenden axial verlaufenden, stirnseitig offenen Schlitzen 53 versehen ist und zudem in rechtwinkliger Anordnung dazu einen dritten Führungsschlitz 54 aufweist, der zur spielfreien Aufnahme eines radialen Führungszapfens 55 eines Spannringes 56 vorgesehen ist. Der Führungszapfen 55 sitzt fest in einer radialen Bohrung 57 des Spannringes 56 und ragt um ein etwa der Wanddicke des Führungsrohres 8 entsprechendes Maß in eine zylindrische Ausnehmung 58 des Spannringes 56, deren Durchmesser auf den Außendurchmesser des Führungsrohres 8 abgestimmt ist und die den oberen, geschlitzten Endabschnitt des Führungsrohres 8 passend aufnimmt. Oberhalb der Ausnehmung 58 ist eine engere, auf den Innendurchmesser des Führungsrohres 8 abgestimmte Bohrung 59 vorgesehen, durch welche ein zylindrischer Teleskopstab 60, dessen Außendurchmesser dem Innendurchmesser des Führungsrohres 8 entspricht, in das Führungsrohr 8 radial passend und axial verstellbar hineinragt. Der Spannring 56 ist mit zwei durch einen Schlitz 61 voneinander getrennten Spannklauen 62, 63 versehen, die mittels eines Gewinde-Spannbolzens 64, der einen Spannhebel 65 aufweist, unter gleichzeitiger radialer Verengung der Ausnehmung 58 und der Bohrung 59 gegeneinander verspannbar sind, wodurch der Teleskopstab 60 im Führungsrohr 8 axial stufenlos fixierbar ist. Auf der oberen Stirnseite ist der Spannring 56 mit einem exzentrisch angeordneten Ausrichtzapfen 66 versehen, der in eine Paßbohrung 67 der Skalenscheibe 52 ragt, um diese drehfest mit dem Spannring 56 zu verbinden, der seinerseits durch den in den Führungsschlitz 54 ragenden Führungszapfen 55 drehfest mit dem Führungsrohr 8 verbunden ist. Auf diese Weise besteht zwischen dem Führungsrohr 8 und der Skalenscheibe 52 eine starre, drehfeste Verbindung.

Die Skalenscheibe 52 weist eine zu ihrem kreisbogenförmigen Umfangsabschnitt konzentrische, zylindrische Bohrung 68 auf, die den gleichen Durchmesser hat wie die Bohrung 59 des Spannringes 56 und somit in der Lage ist, den Teleskopstab 60 aufzunehmen. Auf der Oberseite der Skalenscheibe 52 ist konzentrisch zur Bohrung 68 eine kreisförmig angeordnete Winkelskala 69 angeordnet, an welcher die jeweilige Winkelstellung eines Skalenzeigers 70 ablesbar ist, der über einen Ringkörper 71 drehfest mit dem Teleskopstab 60 in Verbindung steht. Der Ringkörper 71 weist zu diesem Zweck einen radialen Führungszapfen 72 auf, der in einer Radialbohrung 73 sitzt und in eine Axialnut 74 des Teleskopstabes 60 führend eingreift, derart, daß der Teleskopstab trotzdem axial relativ zum Ringkörper 71, der im übrigen gegen Axialverschiebung auf der Skalenscheibe 52 gesichert sein oder lose auf dieser aufliegen kann, verschiebbar ist. Der Skalenzeiger 70 ist an einer Abflachung 75 der Umfangsfläche des Ringkörpers 71 befestigt, und zwar so, daß er auf der Oberfläche der Skalenscheibe 52 aufliegt und bei Verdrehung des Teleskopstabes 60 relativ zum Führungsrohr 8 entlang der Winkelskala 69 verstellt wird.

Als Kopfteil 3 ist am oberen Ende des Teleskopstabes 60 ein würfelförmiger Aufsatz 80 mittels eines Querstiftes 81 starr befestigt, an dessen einer Vertikalseite 82 ein Klemmhalter 83 mit einer Knebelklemmschraube 84 angeordnet ist. Dieser Klemmhalter 83 ist mittels eines in der Zeichnung nicht erkennbaren Gewindezapfens um eine horizontale, d.h. rechtwinklig zur Standsäulenachse 85 laufende Schwenkachse 86 schwenkbar im Aufsatz 80 gelagert und mittels einer Gewindemutter 87 in jeder beliebigen Schwenklage fixierbar. In einer Klemmbohrung 88, die quer zur Schwenkachse 86 verläuft, ist drehbar und axial verschiebbar ein zylindrischer Rundstab 89 gelagert, der am einen Ende mit einer Sicherungsscheibe 90 versehen ist und am anderen Ende einen starr mit ihm verbundenen Flachstab 91 trägt. Der Rundstab 89 und der Flachstab 91 bilden somit gemeinsam das Ausrichtlineal 4.
Mit Hilfe der Knebelklemmschraube 84, die zwei durch einen Spannschlitz 92 voneinander getrennte Spannklauen 93 und 94 miteinander verbindet, ist der Rundstab 89 mit dem Flachstab 91 in der Querbohrung 88 des Klemmhalters 83 festsitzend fixierbar, so daß das Ausrichtlineal, wenn der Flachstab 91, wie in Fig. 1 dargestellt, mit dem Befestigungsbauteil 100 eines Federdämpferbeines 101 verbunden ist, die gewünschte Ausrichtfunktion ausüben kann. Zu diesem Zweck ist der Flachstab 91 mit Bohrungen 95 und Gewindezapfen 96 versehen, mit deren Hilfe er an entsprechenden Befestigungsbohrungen des Befestigungsbauteils 100 so befestigt werden kann, daß die auf einer Verbindungslinie 102 liegenden Befestigungsbohrungen des Befestigungsbauteils 100 mit Hilfe des Ausrichtlineals 4 gegenüber der Achse 51 des in der Einspanneinheit 1 eingespannten Lagerauges 49 des Stoßdämpferzylinders 50 einen mit Hilfe des Skalenzeigers 70 an der Winkelskala 69 ablesbaren Adapterwinkel α1 einstellbar sind. Um diese Winkeleinstellung vornehmen zu können, ist es jedoch erforderlich, die sich mit erheblicher Vorspannung einerseits an einem unteren Federteller 103 und andererseits an einem oberen Federteller 104 des Befestigungsbauteils 100 abstützende Schraubendruckfeder 105 des Federdämpferbeins 101 mittels eines in der Zeichnung nicht dargestellten, geeigneten Federnspanners von den beiden Federtellern 103 und 104 zu lösen.

Bei dem in Fig. 1 dargestellten Federdämpferbein 101 beträgt der zwischen der Verbindungslinie 102 der Befestigungsbohrungen des Befestigungsbauteils 100 und der Achse 51 des Lagerauges 49 einzustellende Adapterwinkel α1 90°, der mittels des Skalenzeigers 70 an der Winkelskala 69 der Skalenscheibe 52 ablesbar ist.
Während bei dem Anwendungsbeispiel, das in Fig. 1 dargestellt ist, die Exzentrizität E1, d.h. der radiale Abstand der mit der Verbindungslinie 102 zusammenfallenden Achse 109 des Rundstabes 89 bzw. des Ausrichtlineals 4 von einer parallel dazu verlaufenden, die Standsäulenachse 85 schneidenden Mittellinie 110 gleich groß ist, wie die Exzentrizität zwischen der Verbindungslinie 102 der Befestigungsbohrungen des Befestigungsbauteils 100 zur Mittelachse 106 des Federdämpferbeines 101, ist bei dem in Fig. 2 dargestellten Ausführungs- bzw. Anwendungsbeispiel eine Exzentrizität E2 gegeben, die wesentlich größer ist. Deswegen ist es dort erforderlich, einen zweiten Klemmhalter 83' vorzusehen, der am Ende eines Rundstabes 89' befestigt ist und mit Hilfe dieses Rundstabes 89' in dem in diesem Fall gegenüber der Fig. 1 um 90° gedrehten Klemmhalter 83 anstelle des Rundstabes 89 gelagert ist. In diesem zweiten Klemmhalter 83', der im übrigen gleich ausgebildet sein kann wie der Klemmhalter 83, ist in diesem Falle der Rundstab 89 des Ausrichtlineals 4 gelagert, und zwar so, daß die Achse 109 des Rundstabes 89 mit der Achse 109' des Rundstabes 89' einen rechten Winkel bildet und das Ausrichtlineal 4 somit gegenüber dem Skalenzeiger 70 in Bezug auf die Anordnung der Fig. 1 um 90° versetzt ist.
Bei dem in Fig. 2 dargestellten Federdämpferbein 101' besteht das Befestigungsbauteil 100' aus einem flachen, tellerartigen sog. Federbeinadapter, in dessen in der Zeichnung nicht sichtbare Befestigungsbohrungen die beiden Gewindezapfen 96 (Fig. 6) des Flachstabes 91 hineingesteckt und mittels Gewindemuttern befestigt sind, so daß eine starre Verbindung zwischen dem Flachstab 91 des Ausrichtlineals 4 und diesem Befestigungsbauteil 100' besteht. Die in diesem Falle längere Schraubendruckfeder 105' stützt sich mit ihrem oberen Ende an einem Federteller 104' und mit dem unteren Ende an einem Federteller 103' ab, der von dem Lagerauge 49 des Stoßdämpferzylinders 50 einen wesentlich größeren Abstand hat als im Falle des Ausführungsbeispieles der Fig. 1.
Bei diesem Ausführungsbeispiel beträgt der Adaptervinkel α2 zwischen der Achse 51 des Lagerauges 49 und der Verbindungslinie 102' der nicht sichtbaren Befestigungsbohrungen des Befestigungsbauteils 100' 51°, der mit Hilfe des Skalenzeigers 70 an der Winkelskala 69 der Skalenscheibe 52 abzulesen bzw. einstellbar ist, indem der Teleskopstab 60 mit dem Ausrichtlineal 4 in die entsprechende Winkellage gebracht wird. Es ist in Fig. 2 auch erkennbar, daß der Teleskopstab 60 weiter aus dem Führungsrohr 8 nach oben herausgezogen ist als dies beim Ausführungsbeispiel der Fig. 1 der Fall ist, was bedeutet, daß aufgrund der axialen Verstellbarkeit des Teleskopstabes 60 die Arbeitslänge des dargestellten und beschriebenen Werkzeuges variierbar und auf unterschiedliche Federbeinlängen einstellbar ist.
Durch die Drehbarkeit des Rundstabes 89 in Klemmhalter 83' bei gelöster Knebelspannschraube 84 ist es auch möglich, den Flachstab 91 jeder beliebigen Schräglage der Befestigungsbohrungen eines Befestigungsbauteils an einem Federdämpferbein anzupassen. Außerdem kann zu diesem Zweck auch die Drehbarkeit des Klemmhalters 83 um die Achse 86 ausgenutzt werden.

Bei der in Fig. 2 dargestellten Anwendungsart ist es, um Winkeleinstellfehler zu vermeiden, wichtig, daß der Rundstab 89' bzw. dessen Achse 109' mit der Standsäulenachse 85 einen exakt rechten Winkel bildet, also bei vertkaler Standsäule 2 horizontal verläuft. Damit diese Bedingung immer eingehalten werden kann, ist vorgesehen, den ersten am Aufsatz 80 des Kopfteils 3 angeordneten Klemmhalter in zwei um 180° zueinander versetzten, jeweils rechtwinklig zur Standsäulenachse verlaufenden Drehlagen, z.B. mittels lösbaren Stiftverbindungen, am Aufsatz 80 zu arretieren.

In Fig. 7 ist ein Ausrichtlineal 4' dargestellt, bei dem an einem Rundstab 89 koaxial ein Steckzapfen 112 oder ein Gewindezapfen angeordnet ist, der beispielsweise, wie in Fig. 8 dargestellt, mittels eines dritten Klemmhalters 83'' eines im zweiten Klemmhalter 83' gelagerten Rundstabes 89'' verschiebbar gelagert ist und der zum Ausrichten solcher Federdämpferbeine benutzt werden kann, deren Befestigungsbauteile eine horizontale Steckbohrung zur Aufnahme des Steckzapfens 112 oder des Gewindezapfens aufweisen. In diesem Falle ergibt sich allerdings ein Winkelversatz von 180° zwischen dem Skalenzeiger 70 und der Achse 113 des Steckzapfens 112 bzw. des Ausrichtlineals 4' ergeben, der bei der Winkeleinstellung des Adapterwinkels berücksichtigt werden muß.

Zur Bearbeitung, insbesondere von geteilten Federdampferbeinen ist es von Vorteil, wenn die Auflageplatte 12 mit einer Ausrichtaufnahme versehen ist, die zur Befestigung des unteren Befestigungsorgans des Federdämpferbeines benutzt werden kann.

Damit des weiteren mit dem Werkzeug auch solche Federdampferbeine ausgerichtet werden können, deren Federbeinrohre jeweils mit einem Lenkhebel versehen sind, kann ferner eine Steckvorrichtung vorgesehen sein, durch welche der Lenkhebel mit der Einspannleiste 7 der Halteplatte 5 in einer definierten Lage verbindbar ist.

## Patentansprüche

1. Werkzeug zum Ausrichten von Federdämpferbeinen (101, 101') von Kraftfahrzeugen, die aus einem Stoßdämpfer und einer sich mit Vorspannung an zwei Federtellern (103, 103', 104, 104') des Stoßdämpfers koaxial abstützenden Schraubendruckfeder (105, 105') bestehen und an einem Ende mit einem Befestigungsbauteil (100, 100') versehen sind, das mehrere Befestigungselemente in Form von Bohrungen und/oder Zapfen aufweist, wobei das Werkzeug mit einer Einspanneinheit (1) für das untere Ende des Federdämpferbeines (101, 101') und einer Standsäule (2) mit Ausrichtmitteln (4, 4') versehen ist, dadurch gekennzeichnet,
daß die Einspanneinheit (1) zum Ausrichten der Winkellage des oberen Befestigungsbauteiles (100,100') bezüglich eines unteren Befestigungsbauteiles (49) zwei Spannbacken (5, 19) und eine Gewindespindel (24) aufweist,
daß die Standsäule (2) rechtwinklig zur Ebene der Spannbacken (5, 19) verlaufend angeordnet ist,
daß deren oberer Kopfteil (3) mit einem exzentrisch zur Standsäulenachse (85) angeordneten und im wesentlichen rechtwinklig dazu verlaufenden Ausrichtlineal (4, 4') versehen ist, welches am oberen Befestigungsbauteil (100, 100') definiert befestigbar ist und welches gemeinsam mit dem Kopfteil (3) um die Standsäulenachse (85) relativ zu einer mit der Einspanneinheit (1) starr verbundenen Winkelskala (69) verschwenkbar und in unterschiedlichen Winkelpositionen fixierbar ist.

2. Werkzeug nach Anspruch 1, dadurch gekennzeichnet, daß die Standsäule (2) aus einem unteren, fest mit der Einspanneinheit (1) verbundenen, zylindrischen Führungsrohr (8) und einem den Kopfteil (3) tragenden, im Führungsrohr teleskopartig axial verstellbar und drehbar gelagerten Teleskopstab (60) besteht, wobei am oberen Ende des Führungsrohres (8) die Winkelskala (69) und ein drehfest mit dem Teleskopstab (60) verbundener Skalenzeiger (70) angeordnet sind.

3. Werkzeug nach Anspruch 1 oder 2, dadurch gekennzeichnet, daß das Ausrichtlineal (4) mittels eines ersten Rundstabes (89) in einem ersten Klemmhalter (83) axial und um die Achse (109) des ersten Rundstabes (89) verstellbar gelagert ist.

4. Werkzeug nach Anspruch 3, dadurch gekennzeichnet, daß der Klemmhalter (83) um eine rechtwinklig zur Standsäulenachse (85) und rechtwinklig zum Rundstab (89) verlaufende Achse (86) drehbar ist.

5. Werkzeug nach Anspruch 3 oder 4, dadurch gekennzeichnet, daß das Ausrichtlineal (4) mit seinem Rundstab (89) an einem zweiten Klemmhalter (83') drehbar und axial verschiebbar gelagert ist, der seinerseits an einem zweiten Rundstab (89') befestigt ist, welcher rechtwinklig zum ersten Rundstab (89) verläuft und im ersten Klemmhalter (83) verstellbar gelagert ist.

6. Werkzeug nach Anspruch 2, dadurch gekennzeichnet, daß in einem etwa 10 cm bis 30 cm betragenden Abstand unterhalb der Einspanneinheit (1) eine Auflageplatte (12) angeordnet und mit dem nach unten verlängerten Führungsrohr (8) verbunden ist.

7. Werkzeug nach Anspruch 1, dadurch gekennzeichnet, daß die Einspanneinheit (1) eine mit einer Befestigungsleiste versehene Halteplatte (5) aufweist, an welcher in derselben Ebene liegend ein Spannrahmen (18) mit einer beweglichen Spannbacke (19) verschwenkbar angelenkt ist.

8. Werkzeug nach Anspruch 7, dadurch gekennzeichnet, daß die Halteplatte (5) und die bewegliche Spannbacke (19) an den sich gegenüberstehenden Stirnseiten (13, 20) jeweils V-förmige Ausnehmungen (14, 21) aufweisen und jeweils mit lösbaren Hilfsspannbacken (45, 46) versehen sind, welche die Ausnehmungen (14, 21) überbrücken.

9. Werkzeug nach Anspruch 1, dadurch gekennzeichnet, daß als Ausrichtlineal (4, 4') zur wahlweisen Verwendung ein an einem Rundstab (89) befestigter, gerader Flachstab (91) und ein ebenfalls mit einem Rundstab (89) versehener Steck- oder Gewindebolzen (112) vorgesehen sind.

10. Werkzeug nach einem der Ansprüche 1 bis 5, dadurch gekennzeichnet, daß der erste Klemmhalter (83) am Kopfteil (3) des Teleskopstabes (60) in zwei um 180° zueinander versetzten Stellungen, in denen die Achse (109) des Rundstabes (89) jeweils rechtwinklig zur Standsäulenachse (85) verläuft, arretierbar ist.

11. Werkzeug nach Anspruch 2, dadurch gekennzeichnet, daß der Skalenzeiger (70) an einem Ringkörper (71) befestigt ist, der mittels eines in eine Axialnut (74) des Teleskopstabes (60) eingreifenden, radialen Führungszapfens (55) drehfest, jedoch axial verschiebbar auf dem Teleskopstab (60) gelagert ist und lose auf der Skalenscheibe (52) aufliegt.

## Claims

1. Tool for aligning spring damping legs (101, 101') of motor vehicles, which consist of a shock absorber and a helical compression spring (105, 105') supported coaxially with pretension on two spring plates (103, 103', 104, 104') of the shock absorber and are provided at one end with an attachment component (100, 100'), which comprises a plurality of attachment members in the form of bores and/or pins, the tool being provided with a clamping unit (1) for the lower end of the spring damper leg (101, 101') and an upright (2) with alignment means (4, 4'), characterised in that the clamping unit (1) for aligning the angular position of the upper attachment component (100, 100') with regard to a lower attachment unit (49) comprises two clamping jaws (5, 19) and a threaded spindle (24), that the upright (2) is arranged to extend at right angles to the plane of the clamping jaws (5, 19), that its upper head part (3) is provided with an alignment rule (4, 4') arranged eccentrically to the upright axis (85) and extending substantially at right angles thereto, which rule can be attached in a definite manner on the upper attachment component (100, 100') and which together with the head part (3) is able to tilt about the upright axis (85) relative to an angular scale (69) rigidly connected to the clamping unit (1) and can be fixed in different angular positions.

2. Tool according to Claim 1, characterised in that the upright (2) consists of a lower cylindrical guide tube (8) securely connected to the clamping unit (1) and a telescopic rod (60) supporting the head part (3) and which is axially adjustable telescopically in the guide tube and is mounted to rotate, the angular scale (69) and a scale indicator (70) connected in a nonrotary manner to the telescopic rod (60) being located at the upper end of the guide tube (8).

3. Tool according to Claim 1 or 2, characterised in that the alignment rule (4) is mounted to move axially by means of a first round bar (89) in a first clamping holder (83) and about the axis (109) of the first round bar (89).

4. Tool according to Claim 3, characterised in that the clamping holder (83) is able to rotate about an axis (86) extending at right angles to the upright axis (85) and at right angles to the round bar (89).

5. Tool according to Claim 3 or 4, characterized in that the alignment rule (4) is mounted to rotate and to be axially displaceable by its round bar (89) on a second clamping holder (83'), which is in turn attached to a second round bar (89'), which extends at right angles to the first round bar (89) and is adjustably mounted in the first clamping holder (83).

6. Tool according to Claim 2, characterised in that a support plate (12) is located at a distance below the clamping unit (1) amounting to approximately 10 cm to 30 cm and it is connected to the guide tube (8) extended downwards.

7. Tool according to Claim 1, characterized in that the clamping unit (1) comprises a retaining plate (5) provided with an attachment rail, on which plate, lying in the same plane, a clamping frame (18) with a movable clamping jaw (19) is pivoted.

8. Tool according to Claim 7, characterized in that the retaining plate (5) and the movable clamping jaw (19) respectively comprise V-shaped recesses (14, 21) on opposite end faces (13, 20) and each are provided with releasable auxiliary clamping jaws (45, 46), which bridge the recesses (14, 21).

9. Tool according to Claim 1, characterized in that as the alignment rule (4, 4'), for optional use, a straight flat bar (91) attached to a round bar (89) is provided and a plug-in or threaded bolt (112) likewise provided with a round bar (89) is provided.

10. Tool according to one of Claims 1 to 5, characterized in that the first clamping holder (83) on the head part (3) of the telescopic rod (60) can be locked in two positions offset by 180 with respect to each other, in which the axis (109) of the round bar (89) extends respectively at right angles to the upright axis (85).

11. Tool according to Claim 2, characterised in that the scale indicator (70) is attached to an annular member (71), which is mounted by means of a radial guide pin (55), engaging in an axial groove (74) of the telescopic rod (60), in a non-rotary manner but so that it is axially displaceable on the telescopic rod (60) and is supported loosely on the scale disc (52).

## Revendications

1. Outil pour l'ajustage de jambes de suspension du type ressort-amortisseur (101, 101') de véhicules automobiles, composées d'un amortisseur et d'un ressort de pression hélicoïdal (105, 105') précontraint, supporté d'une manière coaxiale sur deux coupelles (103, 103', 104, 104') de l'amortisseur, et munies sur une extrémité d'un composant de fixation (100, 100'), qui présente plusieurs éléments de fixation en forme de trous et/ou de tourillons, l'outil étant muni d'une unité de serrage (1) pour l'extrémité inférieure de la jambe de suspension (101, 101') et d'une colonne (2) avec des moyens d'ajustage (4, 4'), caractérisé en ce que l'unité de serrage (1) présente deux mâchoires de serrage (5, 19) et une broche filetée (24) pour ajuster la position angulaire du composant de fixation supérieur (100, 100') par rapport à un composant de fixation inférieur (49), en ce que la colonne (2) est disposée à angle droit par rapport au plan des mâchoires de serrage (5, 19), en ce que la partie de tête supérieure (3) de la colonne est munie d'une règle d'ajustage (4, 4'), excentrée par rapport à l'axe (85) de la colonne et essentiellement disposée à la perpendiculaire de cet axe, cette règle pouvant être fixée d'une manière définie sur le composant de fixation supérieur (100, 100'), pouvant pivoter, avec la partie de tête (3), autour de l'axe (85) de la colonne par rapport à une graduation angulaire (69), assemblée rigidement avec l'unité de serrage (1), et pouvant être fixée dans différentes positions angulaires.

2. Outil suivant la revendication 1, caractérisé en ce que la colonne (2) se compose d'un tube de guidage inférieur (8), cylindrique, assemblé fermement avec l'unité de serrage (1), et d'une tige télescopique (60) supportant la partie de tête (3), et logée avec une possibilité de rotation et de déplacement axial, à la manière d'une télescope, dans le tube de guidage, la graduation angulaire (69) et un indicateur d'échelle (70), assemblé sans possibilité de rotation avec la tige télescopique (60), étant disposés sur l'extrémité supérieure du tube de guidage (8).

3. Outil suivant l'une des revendications 1 ou 2, caractérisé en ce que la règle d'ajustage (4) est logée dans le sens axial dans un premier support de serrage (83), au moyen d'une première barre ronde (89), et peut se déplacer autour de l'axe (109) de la première barre ronde (89).

4. Outil suivant la revendication 3, caractérisé en ce que le support de serrage (83) peut tourner autour d'un axe (86), perpendiculaire à l'axe (85) de la colonne et à la barre ronde (89).

5. Outil suivant l'une des revendications 3 ou 4, caractérisé en ce que la règle d'ajustage (4), avec sa barre ronde (89), est logée avec une possibilité de rotation et de déplacement axial sur un second support de serrage (83'), ce support étant lui-même fixé sur une deuxième barre ronde (89'), perpendiculaire à la première barre ronde (89) et logée avec une possibilité de déplacement dans le premier support de serrage (83).

6. Outil suivant la revendication 2, caractérisé en ce qu'une plaque d'appui (12) est disposée à une distance de l'ordre de 10 à 30 cm au-dessous de l'unité de serrage (1), et est assemblée avec le tube de guidage (8), prolongé vers le bas.

7. Outil suivant la revendication 1, caractérisé en ce que l'unité de serrage (1) présente une plaque de maintien (5), munie d'une barre de fixation, et sur laquelle s'articule et pivote un cadre de serrage (18), situé dans le même plan, avec une mâchoire de serrage mobile (19).

8. Outil suivant la revendication 7, caractérisé en ce que la plaque de maintien (5) et la mâchoire de serrage mobile (19) présentent respectivement, sur les faces frontales opposées (13, 20), des évidements en V (14, 21), et sont respectivement munies de mâchoires de serrage auxiliaires (45, 46), amovibles, qui recouvrent les évidements (14, 23).

9. Outil suivant la revendication 1, caractérisé en ce qu'une barre plate (91) rectiligne, fixée sur une barre ronde (89), et un pivot d'emboîtement ou une goupille filetée (112), également munie d'une barre ronde (89), sont prévus comme règle d'ajustage (4, 4') pour une utilisation sélective.

10. Outil suivant l'une quelconque des revendications 1 à 5, caractérisé en ce que le premier support de serrage (83) peut être bloqué sur la partie de tête (3) de la tige télescopique (60) dans deux positions, mutuellement déportées de 180°, dans lesquelles l'axe (109) de la barre ronde (89) se situe à angle droit par rapport à l'axe (85) de la colonne.

11. Outil suivant la revendication 2, caractérisé en ce que l'indicateur d'échelle (70) est fixé sur un corps annulaire (71) logé sans possibilité de rotation, mais avec une possibilité de déplacement axial sur la tige télescopique (60), au moyen d'un tourillon de guidage axial (55), qui s'engage dans une rainure axiale (74) de la tige télescopique (55), ce corps reposant librement sur le cadran (52).
